# EUROPÄISCHE PATENTSCHRIFT

(11) **EP 2 985 715 B1**
(45) Veröffentlichungstag und Bekanntmachung des Hinweises auf die Patenterteilung: **14.02.2018**
(21) Anmeldenummer: 14180914.5
(22) Anmeldetag: 14.08.2014
(51) Int. Cl.: H04L 29/06, G06F 21/50, G06F 21/57

(54) **Steuereinrichtung und -Verfahren für einen Netzwerk- und Verwundbarkeits-Scanner**
Control device and method for a network and vulnerability scanner
Dispositif et procédé de commande pour un scanner de vulnérabilité et réseau

(43) Veröffentlichungstag der Anmeldung: 17.02.2016
(73) Patentinhaber: Deutsche Telekom AG, 53113 Bonn (DE)
(72) Erfinder: Eggert, Markus, 53773 Hennef (DE); Meier, Patrick, 53175 Bonn (DE); Hauenstein, Daniel, 53115 Bonn (DE)
(74) Vertreter: Patentship Patentanwaltsgesellschaft mbH

(56) Entgegenhaltungen:
- US-A1- 2004 102 922
- US-A1- 2014 123 295
- US-A1- 2014 143 878

## Beschreibung

Die vorliegende Erfindung betrifft eine Steuereinrichtung für einen Netzwerk- und Verwundbarkeits-Scanner zum Untersuchen eines Computersystems auf das Vorhandensein von Sicherheitslücken.

In Netzwerk- und Verwundbarkeits-Scannern zum Untersuchen eines Computersystems auf das Vorhandensein von Sicherheitslücken erfordert eine Testdurchführung initial eine manuelle Anpassung zahlreicher Parameter von einem Benutzer. Die Benutzung des Netzwerk- und Verwundbarkeits-Scanners ist daher mit einem hohen Verwaltungs- und Pflegeaufwand verbunden. Der Verwaltungsaufwand umfasst beispielsweise das Anlegen von Benutzern, die den Netzwerk- und Verwundbarkeits-Scanner verwenden dürfen oder das Einpflegen von Berechtigungen für Benutzer, falls nur auf einen begrenzten Funktionsumfang zugegriffen werden soll. Für die Durchführung der Untersuchung werden weitere Parameter eingepflegt, wie beispielsweise das Anlegen eines Assets vor einer Testdurchführung, so dass das Zielsystem in einer Datenbank persistent erfasst wird. Zudem wird bei der Erfassung des Zielsystems eine Vielzahl weiterer Parameter übergeben, wie beispielsweise Passwörter oder sonstige Anmeldeinformationen für das Zielsystem.

Oftmals bieten bestehende Netzwerk- und Verwundbarkeits-Scanner keine Möglichkeit, gewisse Abhängigkeiten zu definieren, wann eine Untersuchung tatsächlich durchgeführt werden darf. So besteht beispielsweise nicht die Möglichkeit, eine Untersuchung zu unterbinden, wenn fehlerhafte Anmeldedaten für das Zielsystem übergeben wurden. In diesem Fall können die Untersuchungen nach einem Best Effort-Ansatz durchgeführt werden.

Oftmals werden die Untersuchungen erst in späten Entwicklungsstufen eines Projekts durchgeführt, so dass eine Fehlerbehebung kurz vor einer Fertigstellung des Projekts erfolgt und sich eine Freigabe verzögert. Das Durchführen der Untersuchungen wird von Sicherheitsfachleuten durchgeführt und erfordert eine Koordination von Funktionstests und Sicherheitstests.

Die Druckschrift US 2004 / 0102922 A1 betrifft ein Verfahren zum Ermitteln eines Risikos für ein informationsbasiertes Zielsystem, mit den Schritten: Sammeln von System-Konfigurationsinformationen; Bestimmen/Auswählen von Anforderungen; Auswählen von Testprozeduren; Management von Inhalten; Bestimmen von Risiken; und Ausdrucken von Dokumentationen.

Die Druckschrift US 2013 / 0145465 A1, betrifft ein mehrschichtiges Täuschungssystem zum Erkennen von Eindringversuchen auf ein privates Netzwerk.

Die Druckschrift US 2006 / 0018466 A1, betrifft Techniken zum Sichern eines zu schützenden Netzwerks.

Es ist die der Erfindung zugrundeliegende Aufgabe, eine Untersuchung eines Computersystems auf das Vorhandensein von Sicherheitslücken zu vereinfachen. Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch eine Steuereinrichtung für einen Netzwerk- und Verwundbarkeits-Scanner zum Untersuchen eines Computersystems auf das Vorhandensein von Sicherheitslücken gelöst, mit einer ersten Schnittstelle zum Auswählen eines Testprofils, das Parameterdaten umfasst, die eine Untersuchung des Computersystems definieren; und einer zweiten Schnittstelle zur Übermittlung der Parameterdaten des Testprofils an den Netzwerk- und Verwundbarkeits-Scanner. Die Steuereinrichtung ist ausgebildet, eine Logik von Testdurchläufen zu definieren und zu ermitteln, so dass ein Compliance-Test nach einem Verwundbarkeitstest durchgeführt wird, indem die Ergebnisse des Verwundbarkeitstests als Eingabeparameter für den Compliance-Test genutzt werden. Die Steuereinrichtung ist ferner ausgebildet, nach einer Anmeldung eines Benutzers an der Steuereinrichtung mit einem Passwort von dem Benutzer eine Netzwerkadresse des Computersystems und administrative Anmeldedaten für das Computersystem zu empfangen und anhand der empfangenen Daten zu prüfen, ob das Computersystem netzwerktechnisch erreichbar ist und ob die übergebenen Anmeldedaten administrative Logins für das Computersystem sind.

Dadurch wird beispielsweise der technische Vorteil erreicht, dass die Parameter in einem Testprofil zusammengefasst werden und ein vollständiger Satz von Parametern an den Netzwerk- und Verwundbarkeits-Scanner übermittelt wird. Durch die Auswahl eines Testprofils wird die Bedienung des Netzwerk- und Verwundbarkeits-Scanners vereinfacht. Die Steuereinrichtung kann auf einem Computer implementiert sein.

In einer vorteilhaften Ausführungsform der Steuereinrichtung ist der Netzwerk- und Verwundbarkeits-Scanner modular an die erste Schnittstelle der Steuereinrichtung anbindbar. Dadurch wird beispielsweise der technische Vorteil erreicht, dass die Steuereinrichtung mit einer Vielzahl unterschiedlicher Netzwerk- und Verwundbarkeits-Scanner gekoppelt werden kann.

In einer weiteren vorteilhaften Ausführungsform der Steuereinrichtung ist die erste Schnittstelle ausgebildet, die Parameterdaten kryptografisch verschlüsselt an den Netzwerk- und Verwundbarkeits-Scanner zu übermitteln. Dadurch wird beispielsweise der technische Vorteil erreicht, dass ein unbefugtes Mitlesen der Parameterdaten verhindert wird.

In einer weiteren vorteilhaften Ausführungsform der Steuereinrichtung ist die zweite Schnittstelle ausgebildet, eine kryptografisch verschlüsselte Verbindung zu einem Benutzerendgerät herzustellen. Dadurch wird beispielsweise ebenfalls der technische Vorteil erreicht, dass ein unbefugtes Abhören der Verbindung verhindert wird.

In einer weiteren vorteilhaften Ausführungsform der Steuereinrichtung ist die Steuereinrichtung ausgebildet ist, einen Benutzer zu authentifizieren. Dadurch wird beispielsweise der technische Vorteil erreicht, dass nur berechtigte Benutzer den Netzwerk- und Verwundbarkeits-Scanner über die Steuereinrichtung steuern können.

In einer weiteren vorteilhaften Ausführungsform der Steuereinrichtung ist die Steuereinrichtung ausgebildet, einen Typ des Netzwerk- und Verwundbarkeits-Scanners an der zweiten Schnittstelle automatisch zu erfassen. Dadurch wird beispielsweise der technische Vorteil erreicht, dass je nach Netzwerk- und Verwundbarkeits-Scanner unterschiedliche Testprofile verwendet werden können.

In einer weiteren vorteilhaften Ausführungsform der Steuereinrichtung ist die Steuereinrichtung ausgebildet, das Testprofil in Abhängigkeit des Typs des Netzwerk- und Verwundbarkeits-Scanners zu bestimmen. Dadurch wird beispielsweise der technische Vorteil erreicht, dass die Testprofile in Abhängigkeit des Netzwerk- und Verwundbarkeits-Scanners durch die Steuereinrichtung vorausgewählt werden können.

In einer weiteren vorteilhaften Ausführungsform der Steuereinrichtung ist die Steuereinrichtung ausgebildet, das Testprofil in Abhängigkeit eines Betriebssystems des Computersystems zu bestimmen. Dadurch wird beispielsweise der technische Vorteil erreicht, dass die Testprofile in Abhängigkeit des Betriebssystems des Zielsystems vorausgewählt werden können und je nach Betriebssystem unterschiedliche Untersuchungen durchgeführt werden können.

In einer weiteren vorteilhaften Ausführungsform der Steuereinrichtung ist die Steuereinrichtung ausgebildet, das Testprofil in Abhängigkeit einer logischen Zieladresse des Computersystems zu bestimmen. Dadurch wird beispielsweise der technische Vorteil erreicht, dass je nach Zieladresse unterschiedliche Untersuchungen durchgeführt werden können.

Gemäß einem zweiten Aspekt der Erfindung wird die Aufgabe durch ein Steuerverfahren für einen Netzwerk- und Verwundbarkeits-Scanner zum Untersuchen eines Computersystems auf das Vorhandensein von Sicherheitslücken gelöst, mit den Schritten eines Auswählens eines Testprofils an einer Steuereinrichtung, das Parameterdaten umfasst, die eine Untersuchung des Computersystems definieren; und eines Übermittelns der Parameterdaten des Testprofils von der Steuereinrichtung an den Netzwerk- und Verwundbarkeits-Scanner. Das Steuerverfahren umfasst ferner das Definieren und Ermitteln einer Logik von Testdurchläufen, durch die Steuereinrichtung, so dass ein Compliance-Test nach einem Verwundbarkeitstest durchgeführt wird, indem die Ergebnisse des Verwundbarkeitstests als Eingabeparameter für den Compliance-Test genutzt werden; Empfangen einer Netzwerkadresse des Computersystems und administrativer Anmeldedaten für das Computersystem von einem Benutzer nach einer Anmeldung des Benutzers an der Steuereinrichtung mit einem Passwort; und Prüfen anhand der empfangenen Daten, ob das Computersystem netzwerktechnisch erreichbar ist und ob die übergebenen Anmeldedaten administrative Logins für das Computersystem sind.

Dadurch wird beispielsweise ebenfalls der technische Vorteil erreicht, dass die Bedienung des Netzwerk- und Verwundbarkeits-Scanners vereinfacht wird.

In einer vorteilhaften Ausführungsform des Verfahrens umfasst das Verfahren den Schritt eines kryptografischen Verschlüsselns der Parameterdaten. Dadurch wird beispielsweise ebenfalls der technische Vorteil erreicht, dass ein unbefugtes Mitlesen der Parameterdaten verhindert wird.

In einer weiteren vorteilhaften Ausführungsform des Verfahrens umfasst das Verfahren den Schritt eines Authentifizierens eines Benutzers an der Steuereinrichtung. Dadurch wird beispielsweise ebenfalls der technische Vorteil erreicht, dass eine unberechtigte Benutzung verhindert wird.

In einer weiteren vorteilhaften Ausführungsform des Verfahrens umfasst das Verfahren den Schritt eines automatischen Erfassens des Typs des Netzwerk- und Verwundbarkeits-Scanners an der Steuereinrichtung. Dadurch wird beispielsweise der technische Vorteil erreicht, dass die Testprofile in Abhängigkeit des Netzwerk- und Verwundbarkeits-Scanners durch die Steuereinrichtung vorausgewählt werden können.

Gemäß einem dritten Aspekt der Erfindung wird die Aufgabe durch ein Computersystem gelöst, mit einem Netzwerk- und Verwundbarkeits-Scanner zum Untersuchen des Computersystems auf das Vorhandensein von Sicherheitslücken; und der Steuereinrichtung für den Netzwerk- und Verwundbarkeits-Scanner gemäß dem ersten Aspekt der Erfindung mit einer ersten Schnittstelle zum Auswählen eines Testprofils, das Parameterdaten umfasst, die eine Untersuchung des Computersystems definieren; und einer zweiten Schnittstelle zur Übermittlung der Parameterdaten des Testprofils an den Netzwerk- und Verwundbarkeits-Scanner. Dadurch wird beispielsweise ebenfalls der technische Vorteil erreicht, dass die Bedienung des Netzwerk- und Verwundbarkeits-Scanners vereinfacht wird.

Gemäß einem vierten Aspekt der Erfindung wird die Aufgabe durch ein Computerprogramm mit Programmcode zur Durchführung des Verfahrens nach dem zweiten Aspekt gelöst, wenn das Computerprogramm in einem Computer ausgeführt wird. Dadurch wird beispielsweise ebenfalls der technische Vorteil erreicht, dass die Bedienung des Netzwerk- und Verwundbarkeits-Scanners vereinfacht wird.

Ausführungsbeispiele der Erfindung sind in den Zeichnungen dargestellt und werden im Folgenden näher beschrieben.

### Es zeigen:

- Fig. 1: eine schematische Ansicht eines Computersystems;
- Fig. 2: eine Ansicht einer Benutzerauthentisierung in einer Steuereinrichtung;
- Fig. 3: eine Ansicht einer Eingabe von Parameterdaten;
- Fig. 4: eine weitere Ansicht einer Eingabe von Parameterdaten; und
- Fig. 5: eine Ansicht eines Testergebnisses.

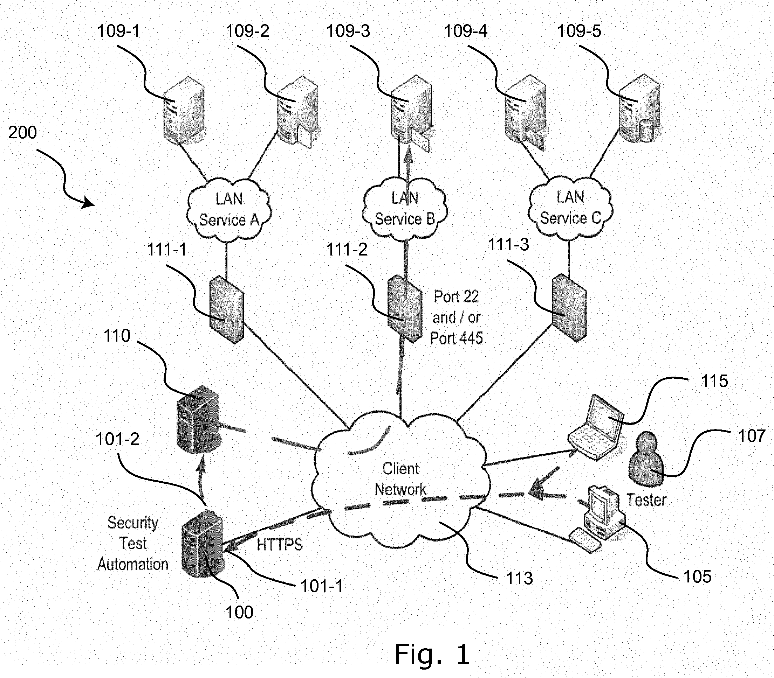

Fig. 1 zeigt eine schematische Ansicht eines Computersystems 200. Das Computersystem 200 umfasst die Computer 109-1, ..., 109-5. Die Computer 109-1, ..., 109-5 sind über Firewalls 111-1, ..., 111-3 und entsprechende Datenleitungen mit einem Netz 113 verbunden, wie beispielsweise einem Intranet. Ein Notebook 115 oder Desktop 105 und eine Steuereinrichtung 100 sind ebenfalls mit dem Netz 113 verbunden. Die Computer 109-1, ..., 109-5 können über Port 22 und/oder 445 erreicht werden. Die Steuereinrichtung 100 dient zum Steuern eines Netzwerk- und Verwundbarkeits-Scanners, der das Computersystem 200 auf das Vorhandensein von Sicherheitslücken überprüft.

Bei einer Durchführung der Untersuchung in dem Computersystem 200 können mehrere Probleme entstehen. Der Aufwand für eine einzelne Untersuchung ist relativ hoch. In der Regel meldet sich ein Benutzer direkt an einem Netzwerk- und Verwundbarkeits-Scanner an, ermittelt ein entsprechendes Profil und passt ein Host-Asset an. Die Nutzung des Netzwerk- und Verwundbarkeits-Scanners und die Anpassung der Testprofile sind umfangreich. Für die korrekte Bedienung des Netzwerk- und Verwundbarkeits-Scanners ist ein umfangreiches Verständnis von Sicherheitsaspekten erforderlich, das nicht bei jedem Benutzer vorhanden ist.

Weiterhin besteht ein hoher Verwaltungsaufwand bei der Durchführung der Untersuchungen auf Sicherheitslücken, da sichergestellt wird, dass ein Benutzer nur bestimmte Zielsysteme untersucht. In einem Sicherheitsumfeld, bei dem die Testergebnisse sensible Inhalte umfassen, ist es nicht wünschenswert, wenn ein Benutzer 107 beliebige Computersysteme auf Sicherheitslücken untersuchen kann. Die Steuereinrichtung 100 erlaubt es, Untersuchungen einzelner Computer 109-1, ..., 109-5 des Computersystems 200 durchzuführen, auch wenn der Benutzer 107 lediglich geringe Erfahrungen im Umgang mit automatisierten Netzwerk- und Verwundbarkeits-Scannern hat.

Die Steuereinrichtung 100 ermöglicht eine einfache Bedienung für einen Benutzer 107 auch ohne Kenntnisse im Bereich der Informationstechnologiesicherheit, indem Testprofile mit Parametern auswählbar sind, die die Untersuchung des Computersystems 200 definieren. Die Steuereinrichtung 100 kann durch einen Computer gebildet sein.

Die Steuereinrichtung 100 umfasst eine erste Schnittstelle 101-1 zum Auswählen eines Testprofils und eine zweite Schnittstelle 101-2 zur Übermittlung der Parameterdaten des ausgewählten Testprofils an einen (oder mehrere) Netzwerk- und Verwundbarkeits-Scanner 110. Das Testprofil umfasst eine Anzahl von vorbestimmten Parameterdaten zum Durchführen der Untersuchung, wie beispielsweise Login-Daten für den Netzwerk- und Verwundbarkeits-Scanner oder Portbereiche für die Untersuchung.

Die Steuereinrichtung 100 wird über die erste Schnittstelle 101-1 und das Netz 113 durch ein Benutzerendgerät 105 oder 115 des Benutzers 107 gesteuert. Der Netzwerk- und Verwundbarkeits-Scanner 110 kann modular an die Steuereinrichtung 100 angebunden werden. Insgesamt entsteht durch die Verwendung der Steuereinrichtung 100 ein geringer Betriebsaufwand zum Durchführen der Untersuchung in dem Computersystem 200.

Die Steuereinrichtung 100 reduziert die Komplexität von Netzwerk- und Verwundbarkeits-Scannern zur Durchführung von Untersuchungen in dem Computersystem, um das Computersystems 200 auf das Vorhandensein von Sicherheitslücken zu überprüfen. Durch die Verwendung von Testprofilen mit einer Anzahl vorgegebener Parameter kann der Benutzer zu jedem Zeitpunkt ein beliebiges Testsystem untersuchen, ohne vorher umfangreiche Konfigurationen oder Anpassungen in der Testdurchführung vorzunehmen. Die Steuereinrichtung 100 braucht selber keine Untersuchungen durchzuführen, sondern kann als vereinfachte Steuerinstanz für nachgelagerte Netzwerk- und Verwundbarkeits-Scanner 110 eingesetzt werden, die die eigentlichen Untersuchungen ausführen.

Beispielsweise kann das Steuergerät 100 Verwundbarkeits- und Compliance-Tests ansteuern und deren Testergebnisse konsolidiert an den Benutzer zurückgeben. Die Anbindung des Netzwerk- und Verwundbarkeits-Scanners kann durch die Bereitstellung einer Fernzugriffsschnittstelle (Remote-API) erfolgen, die das Ansteuern des Netzwerk- und Verwundbarkeits-Scanners über eine programmatische Schnittstelle ermöglicht.

Das Testprofil definiert beispielsweise mittels Parametern, welche Sicherheitsmängel am Zielsystem untersucht werden sollen. Dies kann in Abhängigkeit des Betriebssystems des Zielsystems erfolgen, um nachgelagerte Betriebssystem-spezifische Tests durchzuführen. Für eine Testdurchführung kann ein entsprechendes Asset ausgewählt werden, das mit einem entsprechenden Testprofil verbunden wird. Das Testprofil kann ebenfalls Anmeldedaten umfassen. Nach der Testdurchführung werden die Ergebnisse von der Steuereinrichtung 100 bereitgestellt.

Die Steuereinrichtung 100 vereinfacht eine Steuerung, indem ein Großteil des verbundenen Aufwandes abstrahiert wird, und dem Benutzer eine Schnittstelle mit Testprofilen bereitgestellt wird, beispielsweise ein Web-Portal, die ein reduziertes und vereinfachtes Vorgehen bei der Durchführung der Untersuchung gewährleistet. Nachfolgend ist ein Ablauf einer Untersuchung über ein Portal der Steuereinrichtung 100 als Schnittstelle ausgeführt.

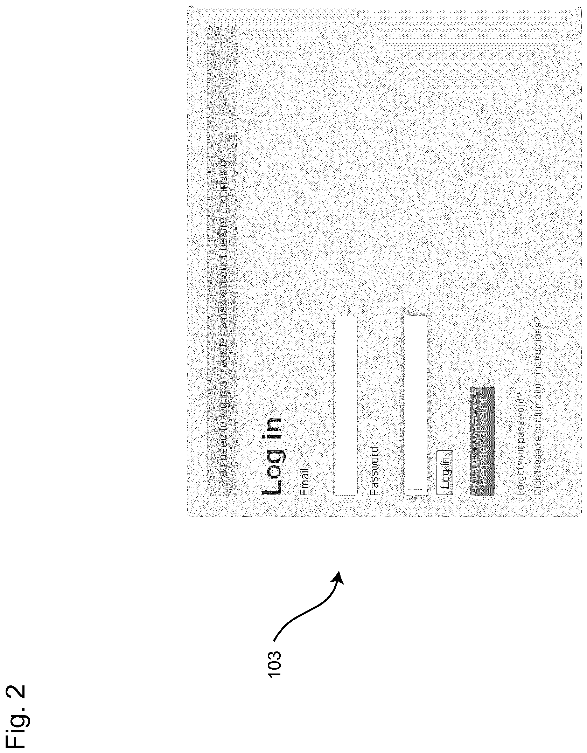

Fig. 2 zeigt eine Ansicht einer Benutzerauthentisierung in der Steuereinrichtung 100 mittels einer Anmeldemaske 103. Die Benutzer 107 können sich selbst an der Steuereinrichtung 100 registrieren, beispielsweise über eine E-Mail Adresse, die im Registrierungsprozess verifiziert wird. Nach erfolgreicher Registrierung kann sich der Benutzer an der Steuereinrichtung 100 mit einem Passwort anmelden.

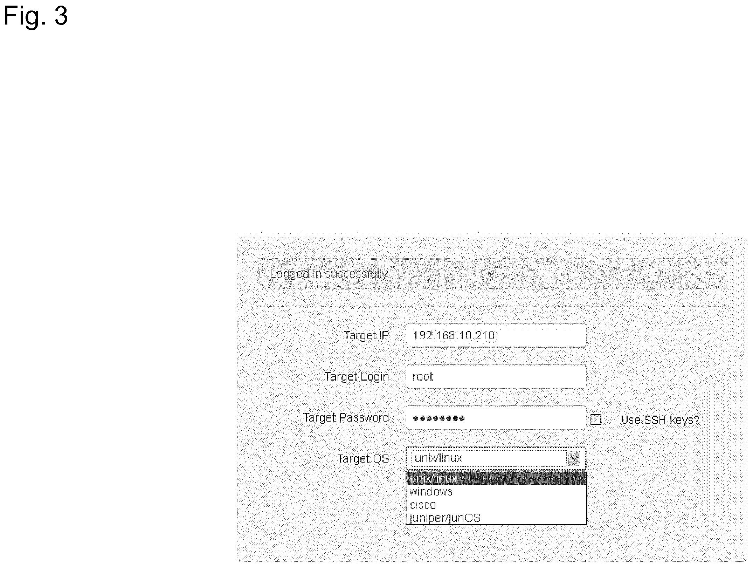

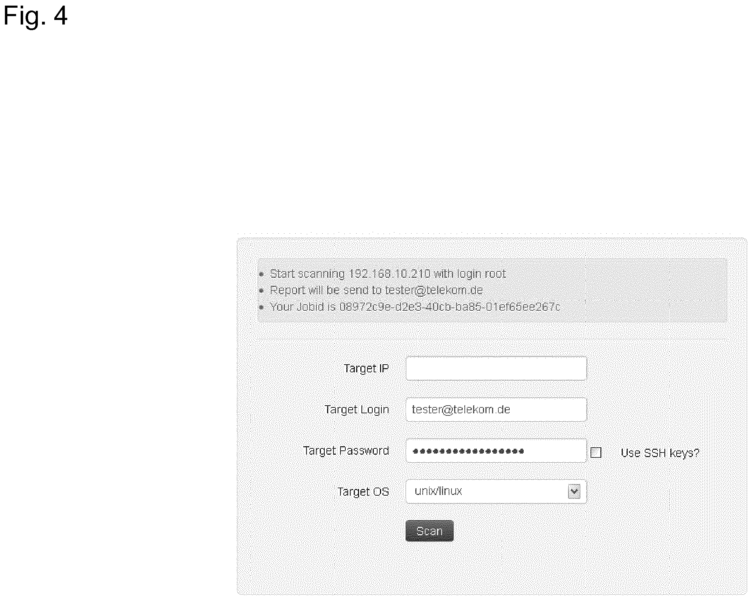

Fig. 3 und Fig. 4 zeigen Ansichten einer Eingabe von Parameterdaten an der Steuereinrichtung 100. Nach der Anmeldung kann von dem Benutzer 107 eine geringe Anzahl von Parametern übergeben werden, wie beispielsweise die Netzwerkadresse des Zielsystems, administrative Anmeldedaten für das Zielsystem oder ein Betriebssystem des zu untersuchenden Zielsystems.

Nachdem die Daten übergeben worden sind, erfolgen zunächst einige Prüfungen. Zum einen wird sichergestellt, ob das Zielsystem netzwerktechnisch erreichbar ist. Falls dies nicht der Fall ist, wird keine Untersuchung initiiert. Des Weiteren wird sichergestellt, dass die übergebenen Anmeldedaten für das Zielsystem tatsächlich administrative Logins sind. Dies eliminiert die Pflege von Zugriffsberechtigungen für die Benutzer 107, da man davon ausgehen kann, dass ein Benutzer 107, der administrative Zugriffsrechte auf ein System besitzt, auch ausreichende Berechtigungen für die Untersuchung von Sicherheitslücken besitzt. Falls die Daten nicht korrekt sind, wird keine Untersuchung initiiert, sondern abgebrochen. Wenn diese Prüfungen erfolgreich abgeschlossen werden konnten, wird die Untersuchung gestartet.

Dabei werden mehrere Schritte durchgeführt. Auf dem Netzwerk- und Verwundbarkeits-Scanner, der die Untersuchung durchführt, wird ein Profil mit entsprechenden Parametern angelegt. In diesem Profil können Anmeldedaten eingetragen werden. Das Profil kann für eine Vielzahl von Testlösungen verwendet werden. Die Untersuchung wird vom Netzwerk- und Verwundbarkeits-Scanner gestartet.

Das Ergebnis der Untersuchung wird von der Steuereinrichtung 100 nach der Durchführung abgerufen. Falls gewünscht können nachgelagerte Untersuchungen gestartet werden. Beispielsweise kann die Steuereinrichtung 100 erlauben, dass die Durchführung von Verwundbarkeits- und Compliance-Tests nacheinander gestartet wird. Nachdem alle Ergebnisse vorliegen, werden alle Profile und Ergebnisse in dem Netzwerk- und Verwundbarkeits-Scanner gelöscht, die für die Testdurchführung angelegt worden sind.

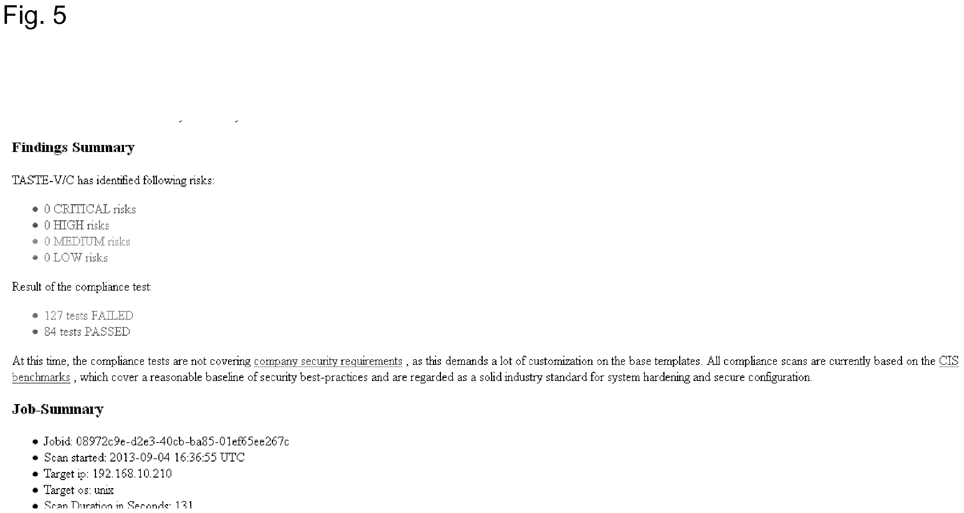

Fig. 5 zeigt eine Ansicht eines Testergebnisses, das von der Steuereinrichtung 100 bereitgestellt wird. Das Testergebnis kann mit einer kurzen Zusammenfassung an den Benutzer 107 per Email versandt werden.

Die Vorteile der Steuereinrichtung 100 sind eine stark vereinfachte Benutzung für technisch unerfahrene Benutzer 107 und ein deutlich reduzierter Pflegeaufwand, da weder ein Benutzer 107 noch Berechtigungen in der Steuereinrichtung 100 vergeben werden müssen. Es erfolgt eine automatische Auswahl korrekter Parameter für die Testdurchführung und es können mehrere Testdurchläufe mit unterschiedlichen Netzwerk- und Verwundbarkeits-Scannern hintereinander durchgeführt werden. Die Logik der Testdurchläufe der Untersuchung wird in der Steuereinrichtung 100 definiert und ermittelt. Beispielsweise kann ein Compliance-Test nach einem Verwundbarkeitstest durchgeführt werden, indem die Ergebnisse auf dem Verwundbarkeitstest als Eingabeparameter genutzt werden. Compliance-Tests können beispielsweise von der Auswahl des korrekten Zielbetriebssystems abhängen. Diese Auswahl kann nach einem erfolgreichen Verwundbarkeitstest automatisiert erfolgen, da das Betriebssystem bereits ermittelt worden ist.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Steuereinrichtung
- 101: Schnittstelle
- 103: Anmeldemaske
- 105: Benutzerendgerät (stationär, Desktop)
- 107: Benutzer
- 109: Computer
- 110: Netzwerk- und Verwundbarkeitsscanner
- 111: Firewall
- 113: Netz
- 115: Benutzerendgerät (mobil, Notebook)
- 200: Computersystem

## Patentansprüche

1. Steuereinrichtung (100) für einen Netzwerk- und Verwundbarkeits-Scanner (110) zum Untersuchen eines Computersystems (200) auf das Vorhandensein von Sicherheitslücken, mit:
einer ersten Schnittstelle (101-1) zum Auswählen eines Testprofils, das Parameterdaten umfasst, die eine Untersuchung des Computersystems (200) definieren; und
einer zweiten Schnittstelle (101-2) zur Übermittlung der Parameterdaten des Testprofils an den Netzwerk- und Verwundbarkeits-Scanner (110),
wobei die Steuereinrichtung (100) ausgebildet ist, eine Logik von Testdurchläufen zu definieren und zu ermitteln, so dass ein Compliance-Test nach einem Verwundbarkeitstest durchgeführt wird, indem die Ergebnisse des Verwundbarkeitstests als Eingabeparameter für den Compliance-Test genutzt werden,
wobei die Steuereinrichtung (100) ferner ausgebildet ist, nach einer Anmeldung eines Benutzers an der Steuereinrichtung (100) mit einem Passwort von dem Benutzer eine Netzwerkadresse des Computersystems (200) und administrative Anmeldedaten für das Computersystem (200) zu empfangen und anhand der empfangenen Daten zu prüfen, ob das Computersystem (200) netzwerktechnisch erreichbar ist und ob die übergebenen Anmeldedaten administrative Logins für das Computersystem (200) sind.

2. Steuereinrichtung (100) nach Anspruch 1, wobei der Netzwerk- und Verwundbarkeits-Scanner (110) modular an die zweite Schnittstelle (101-2) der Steuereinrichtung (100) anbindbar ist.

3. Steuereinrichtung (100) nach einem der vorangehenden Ansprüche, wobei die zweite Schnittstelle (101-2) ausgebildet ist, die Parameterdaten kryptografisch verschlüsselt an den Netzwerk- und Verwundbarkeits-Scanner zu übermitteln.

4. Steuereinrichtung (100) nach einem der vorangehenden Ansprüche, wobei die erste Schnittstelle (101-1) ausgebildet ist, eine kryptografisch verschlüsselte Verbindung zu einem Benutzerendgerät (105, 115) herzustellen.

5. Steuereinrichtung (100) nach einem der vorangehenden Ansprüche, wobei die Steuereinrichtung (100) ausgebildet ist, einen Benutzer (107) zu authentifizieren.

6. Steuereinrichtung (100) nach einem der vorangehenden Ansprüche, wobei die Steuereinrichtung (100) ausgebildet ist, einen Typ des Netzwerk- und Verwundbarkeits-Scanners (110) an der zweiten Schnittstelle (101-2) automatisch zu erfassen.

7. Steuereinrichtung (100) nach Anspruch 6, wobei die Steuereinrichtung (100) ausgebildet ist, das Testprofil in Abhängigkeit des Typs des Netzwerk- und Verwundbarkeits-Scanners zu bestimmen.

8. Steuereinrichtung (100) nach einem der vorangehenden Ansprüche, wobei die Steuereinrichtung (100) ausgebildet ist, das Testprofil in Abhängigkeit eines Betriebssystems des Computersystems (200) zu bestimmen.

9. Steuereinrichtung (100) nach einem der vorangehenden Ansprüche, wobei die Steuereinrichtung (100) ausgebildet ist, das Testprofil in Abhängigkeit einer logischen Zieladresse des Computersystems (200) zu bestimmen.

10. Computersystem, mit:
einem Netzwerk- und Verwundbarkeits-Scanner (110) zum Untersuchen des Computersystems (200) auf das Vorhandensein von Sicherheitslücken; und
der Steuereinrichtung (100) für den Netzwerk- und Verwundbarkeits-Scanner (110) nach einem der Ansprüche 1 bis 9.

11. Steuerverfahren für einen Netzwerk- und Verwundbarkeits-Scanner (100) zum Untersuchen eines Computersystems (200) auf das Vorhandensein von Sicherheitslücken, mit den Schritten:
Auswählen eines Testprofils an einer Steuereinrichtung (100), das Parameterdaten umfasst, die eine Untersuchung des Computersystems (200) definieren;
Übermitteln der Parameterdaten des Testprofils von der Steuereinrichtung (100) an den Netzwerk- und Verwundbarkeits-Scanner (110);
Definieren und Ermitteln einer Logik von Testdurchläufen, durch die Steuereinrichtung (100), so dass ein Compliance-Test nach einem Verwundbarkeitstest durchgeführt wird, indem die Ergebnisse des Verwundbarkeitstests als Eingabeparameter für den Compliance-Test genutzt werden;
Empfangen einer Netzwerkadresse des Computersystems (200) und administrativer Anmeldedaten für das Computersystem (200) von einem Benutzer nach einer Anmeldung des Benutzers an der Steuereinrichtung (100) mit einem Passwort; und
Prüfen anhand der empfangenen Daten, ob das Computersystem (200) netzwerktechnisch erreichbar ist und ob die übergebenen Anmeldedaten administrative Logins für das Computersystem (200) sind.

12. Verfahren nach Anspruch 11, wobei das Verfahren den Schritt eines kryptografischen Verschlüsselns der Parameterdaten umfasst.

13. Verfahren nach Anspruch 11 oder 12, wobei das Verfahren den Schritt eines Authentifizierens eines Benutzers (107) an der Steuereinrichtung (100) umfasst.

14. Verfahren nach einem der Ansprüche 11 bis 13, wobei das Verfahren den Schritt eines automatischen Erfassens des Typs des Netzwerk- und Verwundbarkeits-Scanners an der Steuereinrichtung umfasst.

15. Computerprogramm mit Programmcode zur Durchführung des Verfahrens nach einem der Ansprüche 10 bis 13, wenn das Computerprogramm mittels eines Computers ausgeführt wird.

## Claims

1. Control device (100) for a network and vulnerability scanner (110) for examining a computer system (200) for the presence of security gaps, having:
a first interface (101-1) for selecting a test profile comprising parameter data which define an examination of the computer system (200); and
a second interface (101-2) for transmitting the parameter data in the test profile to the network and vulnerability scanner (110),
wherein the control device (100) is configured to define and determine a logic of test runs, with the result that a compliance test is carried out after a vulnerability test by using the results of the vulnerability test as input parameters for the compliance test,
wherein the control device (100) is also configured to receive, after a user has logged in on the control device (100) with a password, a network address of the computer system (200) and administrative login data for the computer system (200) from the user and to use the received data to check whether the computer system (200) can be reached through the network and whether the transferred login data are administrative logins for the computer system (200).

2. Control device (100) according to Claim 1, wherein the network and vulnerability scanner (110) can be connected to the second interface (101-2) of the control device (100) in a modular manner.

3. Control device (100) according to one of the preceding claims, wherein the second interface (101-2) is configured to transmit the parameter data to the network and vulnerability scanner in a cryptographically encrypted manner.

4. Control device (100) according to one of the preceding claims, wherein the first interface (101-1) is configured to establish a cryptographically encrypted connection to a user terminal (105, 115).

5. Control device (100) according to one of the preceding claims, wherein the control device (100) is configured to authenticate a user (107).

6. Control device (100) according to one of the preceding claims, wherein the control device (100) is configured to automatically capture a type of the network and vulnerability scanner (110) at the second interface (101-2).

7. Control device (100) according to Claim 6, wherein the control device (100) is configured to determine the test profile on the basis of the type of the network and vulnerability scanner.

8. Control device (100) according to one of the preceding claims, wherein the control device (100) is configured to determine the test profile on the basis of an operating system of the computer system (200).

9. Control device (100) according to one of the preceding claims, wherein the control device (100) is configured to determine the test profile on the basis of a logical destination address of the computer system (200) .

10. Computer system having:
a network and vulnerability scanner (110) for examining the computer system (200) for the presence of security gaps; and
the control device (100) for the network and vulnerability scanner (110) according to one of Claims 1 to 9.

11. Control method for a network and vulnerability scanner (100) for examining a computer system (200) for the presence of security gaps, having the steps of:
selecting a test profile on a control device (100), which test profile comprises parameter data which define an examination of the computer system (200);
transmitting the parameter data of the test profile from the control device (100) to the network and vulnerability scanner (110);
defining and determining a logic of test runs by means of the control device (100), with the result that a compliance test is carried out after a vulnerability test by using the results of the vulnerability test as input parameters for the compliance test;
receiving a network address of the computer system (200) and administrative login data for the computer system (200) from a user after the user has logged in on the control device (100) with a password; and
using the received data to check whether the computer system (200) can be reached through the network and whether the transferred login data are administrative logins for the computer system (200).

12. Method according to Claim 11, wherein the method comprises the step of cryptographically encrypting the parameter data.

13. Method according to Claim 11 or 12, wherein the method comprises the step of authenticating a user (107) on the control device (100).

14. Method according to one of Claims 11 to 13, wherein the method comprises the step of automatically capturing the type of the network and vulnerability scanner at the control device.

15. Computer program having program code for carrying out the method according to one of Claims 10 to 13 when the computer program is executed by means of a computer.

## Revendications

1. Dispositif de commande (100) pour un scanner de réseau et de vulnérabilité (110) destiné à examiner un système informatique (200) quant à la présence de failles de sécurité, comportant :
une première interface (101-1) destinée à sélectionner un profil de test qui comprend des données de paramètres, lesquelles définissent un examen du système informatique (200) ; et
une deuxième interface (101-2) destinée à transmettre les données de paramètres du profil de test au scanner de réseau et de vulnérabilité (110),
le dispositif de commande (100) étant conçu pour définir et déterminer une logique d'exécution des tests de sorte qu'un test de conformité soit effectué après un test de vulnérabilité en utilisant les résultats du test de vulnérabilité en tant que paramètres d'entrée pour le test de conformité,
le dispositif de commande (100) étant en outre conçu pour, après une identification d'un utilisateur auprès du dispositif de commande (100) avec un mot de passe,
recevoir de la part de l'utilisateur une adresse de réseau du système informatique (200) et des données d'identification administratives pour le système informatique (200) et pour vérifier, à l'aide des données reçues, si le système informatique (200) est joignable par une connexion de réseau et si les données d'identification transmises sont des identifiants de connexion administratifs pour le système informatique (200) .

2. Dispositif de commande (100) selon la revendication 1, le scanner de réseau et de vulnérabilité (110) pouvant être raccordé de manière modulaire à la deuxième interface (101-2) du dispositif de commande (100).

3. Dispositif de commande (100) selon l'une quelconque des revendications précédentes, la deuxième interface (101-2) étant conçue pour communiquer au scanner de réseau et de vulnérabilité les données de paramètres chiffrées de manière cryptographique.

4. Dispositif de commande (100) selon l'une quelconque des revendications précédentes, la première interface (101-1) étant conçue pour établir une liaison chiffrée de manière cryptographique vers un terminal d'utilisateur (105, 115).

5. Dispositif de commande (100) selon l'une quelconque des revendications précédentes, le dispositif de commande (100) étant conçu pour authentifier un utilisateur (107).

6. Dispositif de commande (100) selon l'une quelconque des revendications précédentes, le dispositif de commande (100) étant conçu pour détecter automatiquement un type du scanner de réseau et de vulnérabilité (110) sur la deuxième interface (101-2).

7. Dispositif de commande (100) selon la revendication 6, le dispositif de commande (100) étant conçu pour déterminer le profil de test en fonction du type de scanner de réseau et de vulnérabilité.

8. Dispositif de commande (100) selon l'une quelconque des revendications précédentes, le dispositif de commande (100) étant conçu pour déterminer le profil de test en fonction d'un système d'exploitation du système informatique (200).

9. Dispositif de commande (100) selon l'une quelconque des revendications précédentes, le dispositif de commande (100) étant conçu pour déterminer le profil de test en fonction d'une adresse cible logique du système informatique (200).

10. Système informatique, comprenant :
un scanner de réseau et de vulnérabilité (110) destiné à examiner le système informatique (200) quant à la présence de failles de sécurité ; et
le dispositif de commande (100) pour le scanner de réseau et de vulnérabilité (110) selon l'une des revendications 1 à 9.

11. Procédé de commande pour un scanner de réseau et de vulnérabilité (100) destiné à examiner un système informatique (200) quant à la présence de failles de sécurité, comprenant les étapes suivantes :
sélectionner un profil de test sur un dispositif de commande (100) qui comprend des données de paramètres,
lesquelles définissent un examen du système informatique (200) ;
transmettre les données de paramètres du dispositif de commande (100) au scanner de réseau et de vulnérabilité (110) ;
définir et déterminer une logique d'exécution des tests, par le dispositif de commande (100), de sorte qu'un test de conformité soit effectué après un test de vulnérabilité en utilisant les résultats du test de vulnérabilité en tant que paramètres d'entrée pour le test de conformité ;
recevoir une adresse de réseau du système informatique (200) et des données d'identification administratives pour le système informatique (200) de la part d'un utilisateur après une identification de l'utilisateur auprès du dispositif de commande (100) avec un mot de passe ; et
vérifier, à l'aide des données reçues, si le système informatique (200) est joignable par une connexion de réseau et si les données d'identification transmises sont des identifiants de connexion administratifs pour le système informatique (200).

12. Procédé selon la revendication 11, le procédé comprenant l'étape de chiffrement cryptographique des données de paramètres.

13. Procédé selon la revendication 11 ou 12, le procédé comprenant l'étape d'authentification d'un utilisateur (107) au niveau du dispositif de commande (100) .

14. Procédé selon l'une quelconque des revendications 11 à 13, le procédé comprenant l'étape de détection automatique du type du scanner de réseau et de vulnérabilité sur le dispositif de commande.

15. Programme d'ordinateur comprenant un code de programme destiné à mettre en oeuvre le procédé selon l'une des revendications 10 à 13 lorsque le programme d'ordinateur est exécuté au moyen d'un ordinateur.
